# EUROPÄISCHE PATENTSCHRIFT

(11) **EP 1 495 216 B1**
(45) Veröffentlichungstag und Bekanntmachung des Hinweises auf die Patenterteilung: **27.12.2006**
(21) Anmeldenummer: 03746274.4
(22) Anmeldetag: 14.03.2003
(51) Int. Cl.: F01N 3/28

(54) **KATALYSATOR-TRÄGERKÖRPER MIT WELLMANTEL UND VERFAHREN ZU DESSEN HERSTELLUNG**
CATALYST SUPPORT BODY WITH CORRUGATED SLEEVE AND METHOD FOR PRODUCTION THEREOF
CORPS SUPPORT DE CATALYSEUR COMPORTANT UNE GAINE ONDULEE ET PROCEDE DE FABRICATION

(30) Priorität: 18.04.2002 DE 10217259
(43) Veröffentlichungstag der Anmeldung: 12.01.2005
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); KONIECZNY, Jörg-Roman, 53804 Much (DE); KURTH, Ferdi, 53894 Mechernich (DE); SCHMIDT, Udo, 53819 Neunkirchen (DE); LÖWEN, Alex, 53840 Troisdorf (DE); WIERES, Ludwig, 51491 Overath (DE)
(74) Vertreter: Rössler, Matthias
(86) Internationale Anmeldenummer: PCT/EP2003/002678
(87) Internationale Veröffentlichungsnummer: WO 2003/087548

(56) Entgegenhaltungen:
- WO-A-02/23021
- DE-A- 3 926 072
- US-A- 4 500 099
- US-A- 5 079 210
- PATENT ABSTRACTS OF JAPAN vol. 016, no. 572 (C-1010), 11. Dezember 1992 (1992-12-11) & JP 04 222636 A (TOYOTA MOTOR CORP;OTHERS: 01), 12. August 1992 (1992-08-12) in der Anmeldung erwähnt
- PATENT ABSTRACTS OF JAPAN vol. 017, no. 181 (M-1394), 8. April 1993 (1993-04-08) & JP 04 334719 A (YUTAKA GIKEN CO LTD), 20. November 1992 (1992-11-20)

## Beschreibung

Die vorliegende Erfindung betrifft einen Katalysator-Trägerkörper gemäß dem Oberbegriff des Anspruchs 1 sowie ein Verfahren zu dessen Herstellung. Derartige Katalysator-Trägerkörper werden insbesondere zur Reduzierung des Schadstoffanteils von Abgasen mobiler Verbrennungskraftmaschinen eingesetzt.

Das bedeutungsvollste Einsatzgebiet derartiger Katalysator-Trägerkörper ist in der Reinigung von Abgasen aus Diesel- oder Otto-Motoren in der Kraftfahrzeug-Technik zu sehen. Hierzu werden die Katalysator-Trägerkörper üblicherweise mit einer Trägerschicht (insbesondere Wash-Coat) versehen, die sich durch eine sehr große Oberfläche auszeichnet, wobei diese Trägerschicht üblicherweise mit mindestens einem katalytisch aktiven Material (z. B. Platin, Rhodium od. dgl.) imprägniert ist. Beim Kontakt des Abgases mit diesen katalytisch aktiven Materialien erfolgt eine Reduzierung der im Abgas enthaltenen Schadstoffe, wie beispielsweise Kohlenmonoxid, ungesättigte KohlenwasserstofFe, Stickstoffmonoxid oder ähnliches. Um bereits eine relativ große Oberfläche für die Trägerschicht bereitstellen zu können, werden die Katalysator-Trägekörper üblicherweise mit einem Wabenkörper ausgestattet, welcher eine Vielzahl für ein Fluid durchströmbare Kanäle aufweist. Hierbei sind keramische, extrudierte und metallische Wabenkörper bekannt. Die Wabenkörper werden im allgemeinen in ein Gehäuse eingebracht, welches wiederum direkt in die Abgasleitung integriert wird. In einer solchen mobilen Abgasanlage ist der Katalysator-Trägerkörper hohen thermischen und dynamischen Belastungen ausgesetzt.

Die thermischen Belastungen resultieren beispielsweise einerseits aus der Temperatur des Abgases selbst, wobei diese zunimmt, wenn der Katalysator-Trägerkörper näher an die Verbrennungskraftmaschine angeordnet wird. Andererseits führen auch die chemischen, katalytischen Umsetzungen der Schadstofikomponenten im Abgas zu einer Temperaturerhöhung des Katalysator-Trägerkörpers, da diese im allgemeinen exotherm ablaufen, so dass unter Umständen Temperaturen erreicht werden, die deutlich höher als die Abgastemperatur selbst sind. Die wesentlichen Einflüsse im Hinblick auf die dynamischen Belastungen resultieren aus dem Verbrennungsprozess sowie externen Schwingungsanregungen. Da der Verbrennungsprozess in der Verbrennungskraftmaschine intermittierend erfolgt, setzen sich die daraus resultierenden Druckstöße periodisch und durch das gesamte Abgassystem hindurch fort. Externe Schwingungsanregung erfolgt beispielsweise aufgrund von Fahrbahn-Unebenheiten, über die sich das Automobil bewegt. Aufgrund dieser hohen thermischen und dynamischen Belastung ist eine dauerhafte Verbindung des Wabenkörpers mit dem Gehäuse von besonderem Interesse. Diese Verbindung muss einerseits geeignet sein, unterschiedliches thermisches Ausdehnungsverhalten des Wabenkörpers gegenüber dem Gehäuse zu kompensieren, andererseits muss ein Ablösen des Wabenkörpers vom Gehäuse langfristig vermieden werden.

Gerade im Hinblick auf die Verwendung metallischer Wabenkörper und einer dauerhaften Anbindung an ein metallisches Gehäuse ist es bekannt, die Verbindung des Wabenkörpers mit dem Gehäuse über einer Zwischenlage auszuführen. Diese ist auf ihrer Innenseite mit dem Wabenkörper und auf ihrer Außenseite mit dem Gehäuse verbunden. Eine solche Zwischenlage geht beispielsweise aus der japanischen Veröffentlichung JP 04-222636 A hervor. Die Zwischenlage ist dort als Wellblech ausgeführt und einerseits mit dem Wabenkörper sowie andererseits mit dem Gehäuse verbunden. Der dort beschriebene Wabenkörper besteht aus einem glatten und einem gewellten Blech, welche gemeinsam spiralig zu einem zylindrischen Wabenkörper zusammengerollt sind. Dabei stellt die äußere Begrenzung des Wabenkörpers ein glattes Blech dar. Unter dieser Voraussetzung ist eine Anbindung mittels des Wellblechs relativ unproblematisch, da eine nahezu glatte Oberfläche des Wabenkörpers bereitgestellt wird.

Es sind aber auch andere Anordnungsformen der Blechfolien bekannt. Diese umfassen insbesondere Wabenkörper, welche aus einer Vielzahl von glatten und gewellten Blechfolien gebildet werden, die abwechselnd zueinander angeordnet und anschließend S-förmig, und/oder U-förmig gebogen sind. Zur näheren Beschreibung derartiger metallischer Wabenkörper sei insbesondere auf die EP 0 245 737, WO 90/03220 sowie die DE 37 43 723 verwiesen, deren Offenbarungsinhalt hiermit vollständig integriert ist.

Eine langfristig haltbare Anbindung eines Wabenkörpers an ein Gehäuse ist nicht einfach zu erreichen und Gegenstand zahlreicher Konstruktionsvorschläge. Erschwert wird die Erreichung dieses Ziels dadurch, dass zukünftig immer dünnere Folien eingesetzt werden sollen, bei denen die haltbare Anbindung noch schwieriger ist. Dabei gilt es einerseits, die geltenden gesetzlichen Vorschriften bzw. die hierbei im Vordergrund stehenden zukünftigen Normen zu erfüllen, und andererseits eine kostengünstige und serientaugliche Herstellung derartiger Katalysator-Trägerkörper zu gewährleisten. Ein zentraler Gesichtspunkt diesbezüglich stellt die exakte räumliche Definition von fügetechnischen Verbindungen zwischen den einzelnen Komponenten des Katalysator-Trägerkörpers dar. Nachdem beispielsweise unter Zuhilfenahme von computerunterstützten Simulationsprogrammen eine Bestimmung der örtlichen bzw. räumlichen Anordnung von Verbindungsstellen ermittelbar ist, muss auch noch sichergestellt werden, dass im Rahmen der tatsächlichen Fertigung die fügetechnischen Verbindungen genau und nur an den gewollten Stellen ausgebildet werden.

Üblicherweise werden derartige fügetechnische Verbindungen mittels eines Schweiß- oder Lötverfahrens hergestellt. Das Schweißverfahren bietet dabei den Vorteil, dass eine Temperaturerhöhung des Gehäuses bzw. des Wabenkörpers lokal bzw. räumlich sehr gut dosiert werden kann; nachteilig ist allerdings, dass es hier bereits bei der Herstellung des Katalysator-Trägerkörpers zu unterschiedlich ausgeprägten Gefngeveränderungen der einzelnen Komponenten kommen kann, sodass diese ggf. bereits zu diesem Zeitpunkt schon große innere Spannungen aufweisen. Beim Lötverfahren liegt ein Hauptproblem in der Fließeigenschaft des Lotes während einer thermischen Behandlung. Wie bereits oben ausgeführt, bestehen derartige Wabenkörper vielfach aus kleinen Kanälen, wobei gerade in den Zwickeln derartiger Kanäle bzw. an den Berührstellen benachbarter Komponenten (z.B. Metallfolien etc.) Kapillare gebildet werden, in denen sich das verflüssigte Lot durch Kapillarwirkung ausbreitet. Dabei findet dieses Fließen in der Regel auch gegen die äußere Gewichtskraft sowie ggf. auch über die gesamte Länge eines Katalysator-Trägerkörpers statt. Das hat zur Folge, dass gerade im Hinblick auf die Verwendung einer solchen gewellten Zwischenlage es zu ungewünschten Verbindungsbereichen kommt.

Bei thermisch hoch belasteten Wabenkörpern, das sind insbesondere motornah eingebaute Katalysator-Trägerkörper, die aus dünnen Blechen, insbesondere Blechen einer Dicke kleiner als 30 µm oder sogar als 25 µm, aufgebaut sind, stellt man nach einer längeren Betriebszeit fest, dass diese sich tonnenförmig verformen. Die Durchmesser der Stirnseiten werden geringer als der ursprüngliche Durchmesser, während im mittleren Bereich der ursprüngliche Durchmesser erhalten bleibt. Diese tonnenförmige Verformung ist nicht unbedingt exakt symmetrisch an beiden Stirnseiten, je nach den Betriebsbedingungen. Ein Wellmantel kann dieser Verformung etwas entgegenwirken, wenn er aus dickerem Material hergestellt wird und an den Stirnseiten mit dem Wabenkörper verbunden ist. Ist er zu steif, reißt allerdings der Wabenkörper im Laufe der Zeit stirnseitig ab, ist er zu weich, biegt er sich einfach mit. Es muss daher ein Kompromiss gefunden werden für die Steifigkeit des Wellmantels. Selbst wenn dies optimal gelöst wird, biegt sich der Wellmantel im Laufe der Lebensdauer zusammen mit den Stirnseiten des Wabenkörpers nach innen, wodurch seine äußere Verbindung zum Gehäuse belastet wird und er reißen kann.

In diesem Zusammenhang ist es Aufgabe der vorliegenden Erfindung, einen Katalysator-Trägerkörper anzugeben, der eine möglichst dauerhafte Verbindung zwischen Wabenkörper und Gehäuse aufweist, insbesondere für Wabenkörper aus dünnen Blechen. Der Katalysator-Trägerkörper soll einfach aufgebaut sein und eine stabile Anbindung des Wabenkörpers auch unter hohen thermischen und dynamischen Belastungen gewährleisten. Weiterhin soll ein Verfahren zur Herstellung eines solchen Katalysator-Trägerkörpers angegeben werden. Dabei steht insbesondere eine einfache Durchführbarkeit des Verfahrens im Rahmen einer Serienfertigung im Vordergrund.

Diese Aufgaben werden gelöst durch einen Katalysator-Trägerkörper mit den Merkmalen des Patentanspruchs 1 sowie einem Verfahren zur Herstellung eines Katalysator-Trägerkörpers mit den Merkmalen des Anspruchs 14. Weitere vorteilhafte Ausgestaltungen des Verfahrens bzw. des Katalysator-Trägerkörpers sind in den jeweils abhängigen Patentansprüchen beschrieben. Die Merkmale der einzelnen Unteransprüche sind dabei auch jeweils miteinander kombinierbar.

Ein erfindungsgemäßer Katalysator-Trägerkörper mit einer geometrischen Längsachse umfassend einen Wabenkörper und ein Gehäuse, wobei zwischen dem Wabenkörper und dem Gehäuse ein Wellmantel mit einer Außenseite und einer Innenseite angeordnet ist, wobei der Wellmantel an seiner Außenseite an Anbindungsabschnitten mit dem Gehäuse und an seiner Innenseite mit dem Wabenkörper fügetechnisch verbunden ist, zeichnet sich dadurch aus, dass die Anbindungsabschnitte im wesentlichen auf einer gemeinsamen Umfangslinie liegen und eine möglichst kurze Breite in Richtung der Längsachse haben, jedoch so dimensioniert sind, dass sie den Wabenkörper aufgrund ihrer Gesamtfläche bei Betriebsbedingungen sicher halten können.

Bisher wird die Anbindung eines Wabenkörpers an ein Gehäuse mit oder ohne zwischenliegende Welllage meist mit großzügig bemessenen Lotstreifen bewerkstelligt, die jedenfalls viel größere Anbindungsflächen erzeugen als für die mechanisch sichere Halterung des Wabenkörpers erforderlich sind. Diese Anbindungsflächen haben vor allem eine große Ausdehnung in Richtung der Längsachse, wodurch die zum Biegen des Wellmantels zur Verfügung stehende Länge verkürzt wird, was zur schnelleren Zerstörung des Wellmantels unter Betriebsbedingungen führt. Hier schafft die Erfindung durch enge Begrenzung der axialen Ausdehnung der Anbindungsabschnitte Abhilfe. Natürlich dürfen die Anbindungsabschnitte in ihrer Gesamtfläche nicht so klein werden, dass sie den Wabenkörper unter dynamischen Belastungen nicht mehr sicher halten können, aber es ist doch gegenüber dem Stand der Technik eine signifikante Verkleinerung möglich, die die zur Verfügung stehende axiale Biegelänge des Wellmantels entscheidend vergrößert. Während der Wellmantel nach innen vorzugsweise über seine gesamte Länge mit dem Wabenkörper verbunden ist, dabei dessen tonnenförmige Verformung verringert, aber diese auch mitmacht, ist er nach außen nur in einem sehr kleinen axialen Bereich mit dem Gehäuse verbunden, der insbesondere weniger als 10 mm, bevorzugt weniger als 6 mm und ganz besonders bevorzugt weniger als 4 mm beträgt. Die notwendige axiale Länge der Anbindungsabschnitte lässt sich für einen konkreten Anwendungsfall mit folgenden Überlegungen berechnen: Die gesamte Fläche aller Anbindungsabschnitte muss das Gewicht des beschichteten Wabenkörpers bei den in der Praxis zu erwartenden Beschleunigungen tragen können. Wegen Schwingungen wird beispielsweise eine Belastung von 150 g (das 150fache der Beschleunigung durch die Erdanziehung) angenommen. Die gesamte Fläche der Anbindungsabschnitte hängt zunächst von der Zahl der Anbindungsabschnitte, d.h. von der Zahl der Wellenberge, die das Gehäuse berühren, ab. Man kann eine maximale Belastbarkeit einer guten Lötverbindung von 2,5 N/mm² annehmen, woraus sich die bei einem gegebenen Gewicht und einer zu erwartenden Beschleunigung die Mindestgesamtfläche für die Anbindungsabschnitte ergibt. Mit geringen empirischen Erfahrungen über die Breite eines typischen Anbindungsabschnittes in Umfangsrichtung, die auch etwas von der Wellform des Wellmantels abhängt, und mit der Anzahl der Wellenberge kann man dann die notwendige axiale Breite der Anbindungsabschnitte ausrechnen. Überraschenderweise ergibt sich selbst bei einem Sicherheitszuschlag meist nur eine sehr geringe notwendige Breite in der oben genannten Größenordnung. Je dünner die Bleche eines Wabenkörpers sind, desto geringer ist sein Gewicht und desto schmaler können auch die Anbindungsabschnitte sein.

Das Gehäuse weist normalerweise eine Gehäusedicke von 0,6 mm bis 2 mm auf. Der Wellmantel ist durch seine in Richtung der Längsachse verlaufenden Wellenberge bzw. Wellentäler gekennzeichnet, die die gewünschte Wellstruktur bilden. Die explizite Ausgestaltung der Wellstruktur ist anwendungsspezifisch auszuwählen, wobei bevorzugt eine etwa sinus-förmige oder eine ähnliche Wellstruktur sich bereits sehr gut bewährt hat. Die Wellung kompensiert beispielsweise eine Expansion bzw. Kontraktion des Wabenkörpers in Umfangsrichtung, indem sich die benachbarten Wellenberge bzw. Wellentäler voneinander entfernen bzw. näher zusammenrücken.

Der hier beschriebene Katalysätor-Trägerkörper ist mit mindestens einem Lotstreifen versehen. Dieser Lotstreifen umfasst (zumindest vor einer thermischen Behandlung des Katalysator-Trägerkörpers) in der Regel ein bandförmig ausgebildetes Lot, welches ggf. unter Zuhilfenahme von Haftmitteln bzw. Bindern an dem Wellmantel fixiert wird. Der Lotstreifen selbst kann ggf. auch weitere chemische Komponenten umfassen. Der Wellmantel und/oder das Gehäuse weisen nun mindestens ein Lotbegrenzungsmittel auf Dieses wird als Beschichtung, als Oberflächenbearbeitung oder insbesondere als geometrische Konfiguration ausgebildet. Jeder Spalt ab einer bestimmten Größe beispielsweise verhindert die weitere Ausbreitung von Lot durch Kapillareffekte. Auch Lot abweisende oder zumindest das Anlöten verhindernde Oberflächen, insbesondere oxidierte Oberflächen begrenzen wirksam die Anbindungsbereiche.

Ein bevorzugtes Lotbegrenzungsmittel ist mindestens eine Kante, da mittels einer Kante ein Spalt zwischen dem montierten Wellmantel und dem Gehäuse gebildet wird. Dieser fungiert bei der Herstellung der fügetechnischen Verbindungen wie eine Art Lotstopp, da infolge dieses Spaltes vorhandene Kapillare unterbrochen werden und somit auch ein unerwünschter Lotfluss verhindert wird. Solche Kanten sind dabei bevorzugt direkt in der Nähe des Randes des Lotstreifens angeordnet, insbesondere in einem Abstand kleiner 2 mm, bevorzugt kleiner 1 mm und vorteilhafterweise kleiner 0,5 mm. Auf diese Weise ist eine exakte räumliche Begrenzung von fügetechnischen Verbindungen möglich. Die Ausbildung von Kanten im Wellmantel bzw. im Gehäuse lässt sich dabei relativ einfach verwirklichen, wobei beispielsweise auch auf die Verwendung zusätzlicher Materialien wie keramische Beschichtungen etc., verzichtet werden kann.

Gemäss einer weiteren Ausgestaltung des Katalysator-Trägerkörpers ist der wenigstens eine Lotstreifen auf der Außenseite des Wellmantels umlaufend ausgebildet und mittig bezüglich einer Erstreckung des Wellmantels in Richtung einer Achse angeordnet. Die im wesentlichen mittige Anordnung des Lotstreifens bzw. der Ausbildung einer entsprechenden fügetechnischen Verbindung in diesem Bereich ist deshalb vorteilhaft, weil beim Aufheizen bzw. Abkühlen des Wabenkörpers insbesondere nahe dessen Stirnseiten ein dynamisches Expansions- bzw. Kontraktionsverhalten festzustellen ist. Das bedeutet andererseits, dass gerade in dem zentral bzw. mittig angesiedelten Bereich relativ kleine Relativbewegungen der beiden Komponenten stattfindet. Insofern ist diese Lage besonders zur Anbindung des Wellmantels an dem Gehäuse geeignet. Bei einer mittigen Anordnung braucht die Einbaulage des Wabenkörpers auch später nicht beachtet zu werden. Allerdings kann es in der Praxis sein, dass die beiden Stirnseiten unterschiedlich stark belastet sind und daher unterschiedlich schrumpfen. Dann wird der Lotstreifen bevorzugt etwas außermittig in Richtung der weniger stark schrumpfenden Stirnseite angeordnet.

Gemäß noch einer weiteren Ausgestaltung des Katalysator-Trägerkörpers hat das Gehäuse mindestens eine Einkerbung, welche zumindest eine parallele Kante bildet, wobei die zumindest eine gebildete Kante mit einem Lotstreifen abschließt. D. h., dass die Kante vorteilhafterweise direkt an dem Lotstreifen anliegt. Ganz besonders vorteilhaft ist es, das Gehäuse mit mehreren Einkerbungen zu versehen, deren Kanten beispielsweise einen umlaufenden Lotstreifen beidseitig, d. h. von beiden umlaufenden Rändern her begrenzen. Auf diese Weise wird ein definierter Kontaktbereich gebildet, wobei das im Lotstreifen beinhaltete Lot auch tatsächlich nur zwischen diesen beiden Kanten verläuft. Dadurch ist sichergestellt, dass eine ausreichende Menge Lot in dem dafür vorgesehenen Anbindungsbereich auch während bzw. nach einer thermischen Behandlung des Katalysator-Trägerkörpers verbleibt.

Gemäß einer weiteren Ausgestaltung weist der Wellmantel zusätzlich zu seiner im wesentlichen parallel zur Achse verlaufenden Wellenstruktur mindestens eine Querstruktur auf, die zumindest eine Kante bildet. Die Querstruktur ist in der Regel mit einer Höhe kleiner 1 mm ausgeführt, wobei diese vorteilhafterweise auch umlaufend ausgebildet ist. In der Regel überlagert die mindestens eine Querstruktur die parallel zur Achse verlaufende Wellenstruktur des Wellmantels. Die Querstruktur fungiert dabei als Abstandshalter des Wellmantels gegenüber dem Gehäuse, wobei ebenfalls Kapillareffekte unterbrochen werden können.

Dies könnte jedoch zur Folge haben, dass sich hier ein unnötig großer Ringspalt zwischen dem Wellmantel und dem Gehäuse ausbildet, in den ggf. heißes, unbehandeltes Abgas sich ansammeln kann. Um dies zu verhindern ist es vorteilhaft, wenn die mindestens eine Querstruktur radial nach außen gerichtet ist, wobei das Gehäuse bevorzugt mindestens eine kompatible, d.h. entsprechend angepasste, Ausnehmung hat, so dass zwischen der wenigstens einen Querstruktur und der mindestens einen Ausnehmung ein Spalt gebildet ist. Auf diese Weise wird eine Art Labyrinth-Dichtung generiert, wobei durch das "berührungslose" Ineinandergreifen von Querstruktur und Ausnehmung ein unerwünschter Bypass von heißem, unbehandeltem Abgas während des Einsatzes des Katalysator-Trägerkörpers bzw. ein unerwünschter Lotmittelfluss im Rahmen der Generierung von fügetechnischen Verbindungen verhindert wird.

Nach einer vorteilhaften Weiterbildung des Katalysator-Trägerkörpers weist der Wellmantel zusätzlich zu seiner im wesentlichen parallel zur Achse verlaufenden Wellenstruktur mindestens eine Mikrostruktur auf, welche bevorzugt nahe wenigstens einer Begrenzung des Wellmantels angeordnet ist, wobei hier bevorzugt jeweils mehrere Mikrostrukturen senkrecht zur Achse umlaufend ausgebildet sind. Die Mikrostrukturen haben die Funktion, den Wellmantel in bestimmten Abschnitten axial biegefähiger zu gestalten. Der Wellmantel selbst ist wegen seiner im wesentlichen parallel zur Achse verlaufenden Wellenstruktur relativ steif ausgebildet, was mittels der hier vorgeschlagenen Mikrostruktur zumindest lokal verändert werden kann. Dies ist von besonderem Interesse, da der Wabenkörper beim Abkühlen vorzugsweise eine tonnenförmige Gestalt annimmt; das bedeutet, dass die Bereiche des Wabenkörpers nahe der Stirnseiten einen flächenmäßig kleineren Querschnitt aufweisen als zentrale bzw. mittig angeordnete Bereiche. Die Ursache darin ist einerseits in der relativ großen Menge an gespeicherter Wärme im Inneren des Wabenkörpers sowie in der raschen Abkühlung von außen bzw. nahe den Stirnseiten zu sehen. Ein solches Abkühlungsverhalten macht es erforderlich, dass der Wellmantel einer solchen Verformung nachgeht, ohne hier so hohe thermische Spannungen entstehen zu lassen, die ggf. zum Abtrennen der fügetechnischen Verbindungen führt. Genau dies kann mit derartigen Milcrostrukturen bewirkt werden, wobei hier vorzugsweise 3 bis 10 Mikrostrukturen nahe jeweils einer Stirnseite des Wabenkörpers die Wellenstruktur überlagern. Zur Gestalt bzw. zur Herstellung solcher Mikrostrukturen sei an dieser Stelle auf die EP 0 784 507 verwiesen, auf deren Inhalt hier vollständig Bezug genommen wird.

Weiter wird vorgeschlagen, dass der Wellmantel mindestens einen Verbindungsbereich für fügetechnische Verbindungen mit dem Wabenkörper aufweist, wobei dieser mindestens eine Verbindungsbereich an der Innenseite des Wellmantels nahe einer Stirnseite des Wabenkörpers angeordnet ist, insbesondere mit ihr abschließt. Dabei hat sich in Langzeitversuchen herausgestellt, dass es besonders vorteilhaft ist, lediglich einen Verbindungsbereich vorzusehen, der dafür über die gesamte Länge des Wabenkörpers bzw. über die gesamte Erstreckung des Wellmantel sowie vollständig umschließend ausgeführt ist. Der Wellmantel hat dabei Materialeigenschaften, die gerade im Hinblick auf die oberflächenspezifische Wärmekapazität in etwa zwischen denen des Gehäuses einerseits und denen des Wabenkörpers bzw. der den Wabenkörper bildenden Metallfolien liegt. Eine ausreichende Expansions- bzw. Kontraktionsfreiheit des Wabenkörpers wird dadurch erreicht, dass der Wellmantel ja nur mit seinen Wellenbergen bzw. Wellentälern mit dem Wabenkörper verbunden ist, also hier eine Vielzahl von kleinen streifenförmigen Verbindungen entlang dieser Extrema der Wellstruktur ausgebildet werden.

Es ist aber auch möglich, gerade bei Katalysator-Trägerkörpern, die keinen extrem hohen thermischen und dynamischen Belastungen ausgesetzt werden sollen, mindestens zwei Verbindungsbereiche vorzusehen, wobei zumindest einer dieser Verbindungsbereiche an der Stirnseite des Wellmantels nahe einer Stirnseite des Wabenkörpers angeordnet ist, insbesondere mit ihr abschließt. In diesem Zusammenhang kann es besonders vorteilhaft sein, jeweils einen solchen Verbindungsbereich ausgehend von der Stirnseite des Wabenkörpers über eine Länge von 5 bis 20 mm zwischen Wabenkörper und Wellmantel auszuführen, während im mittleren Bereich eine Fixierung des Wellmantels hin zum Gehäuse stattfindet.

Gemäß noch einer weiteren Ausgestaltung hat das Gehäuse wenigstens einen Freistich, welcher in radialer Richtung gesehen mindestens einen Verbindungsbereich wenigstens teilweise überlagert. Auch ein solcher Freistich dient zur Sicherstellung, dass gerade im Bereich der Stirnseiten das stark unterschiedliche thermische Ausdehnungsverhalten von Wabenkörper und Gehäuse stattfindet. Der Freistich hat wieder die Ausbildung eines Spaltes zwischen dem Wellmantel und dem Gehäuse zur Folge, so dass unerwünschter Lotfluss vermieden wird. In diesem Zusammenhang sei noch darauf hingewiesen, dass das Gehäuse prinzipiell länger oder kürzer als der Wabenkörper bzw. der Wellmantel ausgeführt sein kann. Bevorzugt ist jedoch eine bündige Ausgestaltung von Wabenkörper, Wellmantel und Gehäuse.

Im Hinblick auf den Wellmantel ist es vorteilhaft, dass dieser eine Manteldicke von 0,08 mm bis 0,25 mm hat, wobei die Wellstruktur bevorzugt mit einer Welllänge von 1,5 mm bis 4 mm sowie einer Wellhöhe von 0,5 mm bis 2 mm ausgeführt ist. Ein solcher Wellmantel besteht beispielsweise aus einer hochkohlenstofihaltigen Nickel-Chrom-Eisen-Legierung mit Zusätzen der Mikrolegierungselemente Titan, Zirkonium und von Aluminium und Yttrium. Die chemische Zusammensetzung des Wellmantels ist dabei durch folgende Bestandteile gekennzeichnet: Cr (24-26%), Fe (8-11%), C (0,15-0,25%), Mn (0,1%), Si (0,5%), Cu (0,1%), Al (1,8-2,4%), Ti (0,1-0,2%), Y (0,05-0,12%), Zr (0,01-0,1%) sowie der restlichen Nickel-Basis. Der Wellmantel weist dabei eine außergewöhnliche Oxidationsbeständigkeit bei hohen Temperaturen, eine sehr gute Korrosionsbeständigkeit und ausgezeichnete Hochtemperatur-Zeitstandwerte auf, insbesondere auch bei zyklischen Bedingungen. Eine solche Ausgestaltung des Wellmantels hat sich als besonders vorteilhaft für metallische Wabenkörper herausgestellt, die einen zylindrischen Aufbau haben mit einem Durchmesser von kleiner 100 mm und einer Länge von ca. 75 mm.

Gemäß einem weiteren Aspekt der Erfindung wird ein Verfahren zur Herstellung eines Katalysator-Trägerkörpers umfassend einen Wabenkörper und ein Gehäuse vorgeschlagen, wobei zwischen dem Wabenkörper und dem Gehäuse ein Wellmantel mit einer Außenseite und einer Innenseite angeordnet ist, und der Wellmantel mit seiner Außenseite mit dem Gehäuse und mit seiner Innenseite mit dem Wabenkörper fügetechnisch verbunden ist. Das erfindungsgemäße Verfahren umfasst dabei zumindest die folgenden Schritte:
- Herstellen eines Wabenkörpers, eines Wellmantels sowie eines Gehäuses, wobei der Wellmantel und/oder das Gehäuse mindestens ein Lotbegrenzungsmittel aufweisen;
- Anbringen wenigstens eines Lotstreifens auf dem Wellmantel, wobei dieser im wesentlichen parallel zu dem mindestens einen Lotbegrenzungsmittel angeordnet wird;
- Einfügen von dem mit dem Mantelrohr umgebenden Wabenkörper in das Gehäuse, so dass das mindestens eine Lotbegrenzungsmittel einen Anbindungsabschnitt mit dem wenigstens einen Lotstreifen begrenzt;
- Ausbilden von fügetechnischen Verbindungen zumindest zwischen dem Wellmantel und dem Wabenkörper sowie zwischen dem Wellmantel und dem Gehäuse, wobei das Lotbegrenzungsmittel ein Auseinanderlaufen des Lotstreifens verhindert.

Ein solches Verfahren ist insbesondere geeignet zur Herstellung eines Katalysator-Trägerkörpers, wie er bereits oben beschrieben wurde. Dabei ist es wiederum besonders vorteilhaft, einen Lotstreifen auf der Außenseite des Wellmantels umlaufend auszubilden und mittig bezüglich einer Erstreckung des Wellmantels in Richtung einer Achse anzuordnen.

Weiter wird vorgeschlagen, den Wabenkörper durch Stapeln und/oder Wickeln von zumindest teilweise strukturierten Blechfolien herzustellen, die abwechselnd so angeordnet werden, dass für ein Fluid durchströmbare und bevorzugt im wesentlichen parallel zur Achse verlaufende Kanäle gebildet werden. Bezüglich der Herstellung des Wabenkörpers sei an dieser Stelle auch auf den Offenbarungsinhalt der EP 0 245 737, der WO 90/03220 oder der DE 37 43 723 verwiesen. Dabei sei noch angemerkt, dass derartige Blechfolien bevorzugt eine Foliendicke kleiner 50 µm, insbesondere kleiner 22 µm und bevorzugt kleiner 15 µm aufweisen. Dabei werden Wabenkörper mit einer Kanaldichte pro Einheitsquerschnittsfläche gebildet, die vorteilhafterweise im Bereich von 500 cpsi (cells per square inch) bis 1.800 cpsi liegen.

Gemäß einer weiteren Ausgestaltung des Verfahrens wird der Wabenkörper zunächst mit dem Wellmantel nur teilweise in das Gehäuse eingefügt, sodann stirnseitig mit einem Haftmittel versehen, vollständig eingeschoben und ebenfalls stirnseitig mit einem pulverförmigen Lot versehen, bevor das Ausbilden von fügetechnischen Verbindungen erfolgt. Das nur teilweise Einbringen des Wabenkörpers gemeinsam mit dem Wellmantel in das Gehäuse hat zur Folge, dass die einzelnen Blechfolien hinsichtlich ihrer relativen Lage zueinander ausreichend fixiert sind. Dabei wird durch den stirnseitigen Kontakt mit einem Haftmittel und unter Benutzung der Kapillareffekte in den später als Verbindungsbereich dienenden Abschnitten das Haftmittel eingeleitet. Die obengenannten Kanten dienen hier auch zur Begrenzung des Haftmittel-Flusses. Nach dem Einführen des Wabenkörpers mit dem Wellmantel in das Gehäuse wird beispielsweise unter Zuhilfenahme von Druckluft pulverFörmiges Lotmaterial in innere Bereiche des Wabenkörpers hineingeblasen, wobei das Lotpulver an dem zuvor eingebrachten Haftmittel kleben bleibt. Die Ausbildung von fiigetechnischen Verbindungen zwischen den Blechfolien untereinander, den Blechfolien mit dem Wellmantel, und dem Wellmantel mit dem Gehäuse erfolgt bevorzugt im Rahmen eines Hochtemperatur-Vakuum-Prozesses.

Weitere vorteilhafte Ausgestaltungen des Katalysator-Trägerkörpers bzw. des Verfahrens werden mit Bezug auf die Zeichnungen näher erläutert. Dabei wird hier ausdrücklich darauf hingewiesen, dass die Erfindung auf die dargestellten Ausführungsbeispiele nicht begrenzt ist, sondern diese im wesentlichen zur näheren Illustrierung der Vorteile der Erfindungen ausgewählt wurden.

Es zeigen:
- Fig. 1: eine perspektivische, schematische Darstellung einer Ausgestaltung des Katalysator-Trägerkörpers;
- Fig. 2: eine stirnseitige Ansicht einer Ausgestaltung eines Katalysator-Trägerkörpers;
- Fig. 3: eine Detailansicht einer weiteren Ausgestaltung des Katalysator-Trägerkörpers im Teilschnitt;
- Fig. 4: einen Längsschnitt einer weiteren Ausgestaltung eines Katalysator-Trägerkörpers; und
- Fig. 5: eine Detailansicht eines Wellmantels.

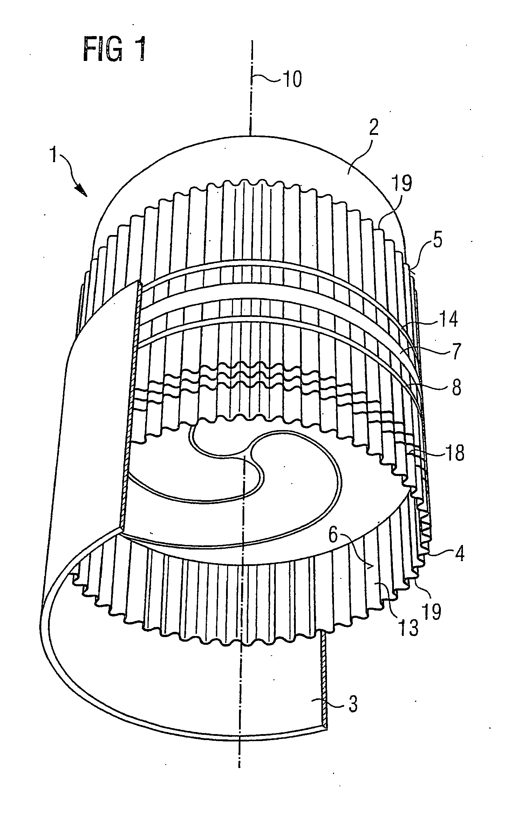

Fig. 1 zeigt schematisch und perspektivisch eine Ausgestaltung eines Katalysator-Trägerkörpers 1 umfassend einen Wabenkörper 2 und ein Gehäuse 3. Zwischen dem Wabenkörper 2 und dem Gehäuse 3 ist ein Wellmantel 4 mit einer Außenseite 5 und einer Innenseite 6 angeordnet, wobei der Wellmantel 4 mit seiner Außenseite 5 mit dem Gehäuse 3 und mit seiner Innenseite 6 mit dem Wabenkörper 2 fügetechnisch verbunden ist. Die zentral bzw. mittig angeordnete fügetechnische Verbindung des Wellmantels 4 mit dem Gehäuse 3 ist dabei mittels eines Lotstreifens 7 ausgeführt. Um zu verhindern, dass dieser Lotstreifen 7 bzw. das darin enthaltene Lotmittel während einer thermischen Behandlung des Katalysator-Trägerkörpers 1 in unerwünschte Bereiche vordringt, ist der Wellmantel 4 mit zwei Querstrukturen 14 versehen, die jeweils Kanten 8 bilden, um den oben beschriebenen Kapillar-Effekt zu unterbrechen.

Der Wellmantel 4 ist hier neben seiner im wesentlichen parallel zu einer Achse 10 verlaufenden Wellenstruktur 13 zusätzlich nahe der Stirnseiten 21 mit mehreren umlaufenden Mikrostrukturen 18 versehen, welche die Nachgiebigkeit des Wellmantels 4 in radialer Richtung gerade nahe der Begrenzung 19 des Wellmantels 4 bewirkt.

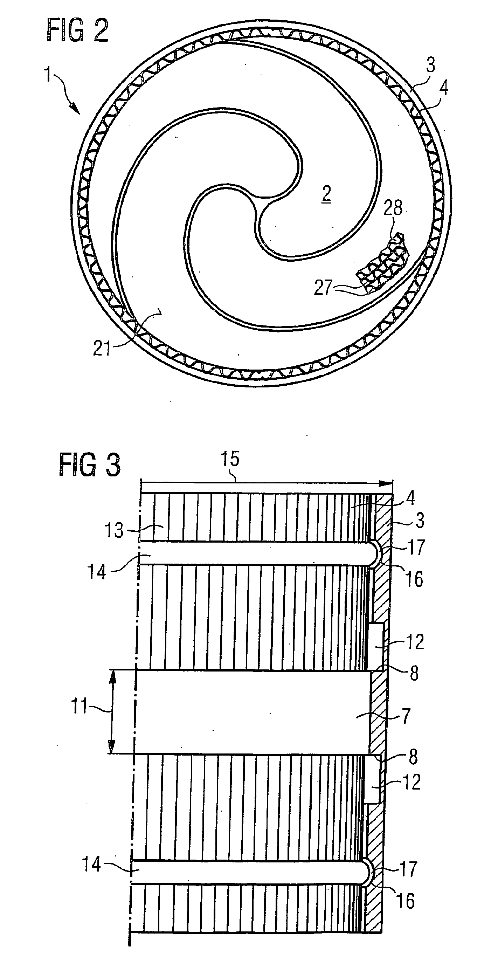

Fig. 2 zeigt schematisch eine stirnseitige Ansicht eines erfindungsgemäßen Katalysator-Trägerkörpers 1. Der Wabenkörper 2 ist hier mit vier gewundenen Stapeln von glatten und gewellten Blechfolien 27 ausgeführt. Die abwechselnd angeordneten glatten und gewellten Blechfolien 27 bilden Kanäle 28, die später zur Fixierung der für die Umwandlung von Schadstoffen erforderlichen katalytisch aktiven Trägerschicht dienen. Diese Kanäle 28 erstrecken sich dabei von einer Stirnseite 21 im wesentlichen parallel zur Achse 10 bis zur gegenüberliegenden Stirnseite 21. Der Wabenkörper 2 ist in einem stabilen Gehäuse 3 gelagert, wobei ein Wellmantel 4 zwischen dem Wabenkörper 2 und dem Gehäuse 3 angeordnet ist und zur Kompensation unterschiedlichen thermischen Ausdehnungsverhaltens des Gehäuses 3 und des Wabenkörpers 2 dient.

Fig. 3 zeigt schematisch eine Detailansicht im Teilschnitt einer Ausgestaltung des Katalysator-Trägerkörpers 1. Dabei ist wiederum ein Wellmantel 4 mit einer entsprechenden Wellstruktur 13 dargestellt. Die Wellstruktur 13 wird von zwei Querstrukturen 14 überlagert, die ggf. einen Anbindungsabschnitt des Wellmantels 4 mit dem Gehäuse 3 definieren, indem sie einen Lotmittelfluss des mittig dargestellten Lotstreifens 7 mit einer Breite 11 während einer thermischen Behandlung des Katalysator-Trägerkörpers 1 über die Querstrukturen 14 hinaus verhindern. Die Querstrukturen 14 erstrecken sich in Richtung des Radius 15 auswärts, wobei das Gehäuse 3 entsprechende Ausnehmungen 16 aufweist, so dass dennoch ein Spalt 17 zwischen den Querstrukturen 14 und dem Gehäuse 3 sichergestellt ist. Alternativ oder zusätzlich zu den Querstrukturen 14 des Wellmantels 4 kann das Gehäuse 3 mit Einkerbungen 12 versehen sein, die ebenfalls einen Lotmittelfluss infolge einer Kapillarwirkung zwischen der Wellstruktur 13 des Wellmantels 4 und dem Gehäuse 3 unterbrechen. Die Einkerbungen 12 bilden dabei Kanten 8, die beispielsweise einen Abstand voneinander aufweisen, der im wesentlichen der Breite 11 des Lotstreifens 7 entspricht. Dabei wird sichergestellt, dass ein Fließen des Lotmittels über die ursprüngliche Breite 11 des Lotstreifens 7 hinaus verhindert wird.

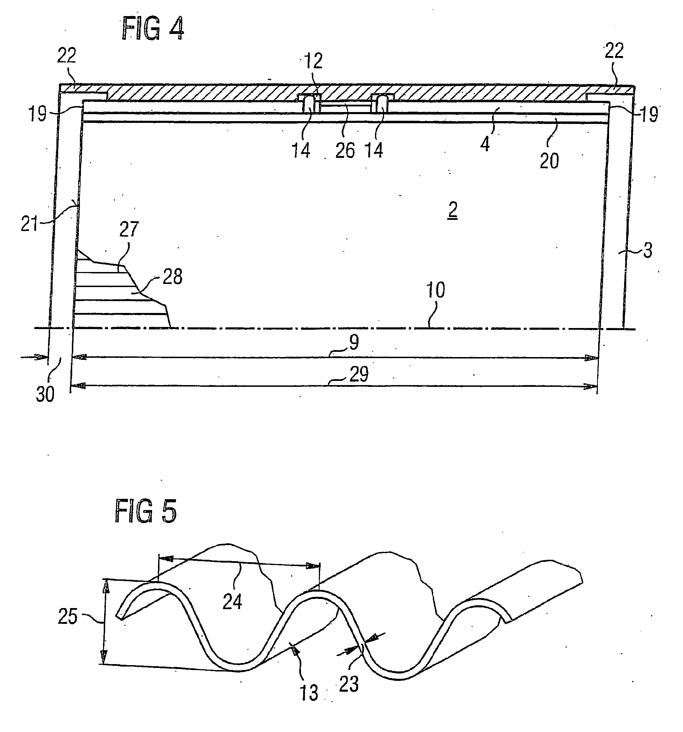

Fig. 4 zeigt in einem Längsschnitt eine weitere Ausgestaltung eines Katalysator-Trägerkörpers 1. Dabei ist der Wabenkörper 2 wiederum mit Blechfolien 27 ausgeführt, die Kanäle 28 bilden, die sich von einer Stirnseite 21 bis zur gegenüberliegenden Stirnseite 21 1 erstrecken. In der dargestellten Ausführungsform entsprechen sich die Länge 29 des Wabenkörpers 2 und die Erstreckung 9 des Wellmantels 4. Der Verbindungsbereich 20 zwischen Wellmantel 4 und Wabenkörper 2 ist dabei ebenfalls über die gesamte Länge 29 bzw. Erstreckung 9 ausgeführt. Das Gehäuse 3 ist im Gegensatz dazu länger ausgeführt, so dass jeweils ein Überstand 30 gebildet ist. Der Anbindungsabschnitt 26 zwischen Wellmantel 4 und Gehäuse 3 ist hier durch jeweils zwei Querstrukturen 14 des Wellmantels 4 sowie zwei Einkerbungen 12 im Gehäuse 14 begrenzt. Im Bereich der Begrenzungen 19 des Wellmantels 4 weist das Gehäuse zudem Freistiche 22 auf, die eine Anbindung des Gehäuses 3 an den Wellmantel 4 gerade nahe den Stirnseiten 21 verhindern.

Fig. 5 zeigt schematisch und perspektivisch eine Ausgestaltung eines Wellmantels 4. Der Wellmantel 4 hat eine Materialdicke 23 sowie eine Wellhöhe 25 und eine Welllänge 24. Die Manteldicke 23 liegt bevorzugt im Bereich von 100 µm bis 200 µm. Die explizite Ausgestaltung der Wellstruktur ist stets im Hinblick auf die zu erwartenden thermischen und dynamischen Belastungen des Katalysator-Trägerkörpers im Abgassystem einer mobilen Verbrennungskraftmaschine auszuführen. Dabei haben sich beispielsweise Welllängen 24 von 1,5 mm bis 4 mm sowie Wellhöhen 25 von 0,5 mm bis 2 mm als vorteilhaft erwiesen.

### Bezugszeichenliste

- 1: Katalysator-Trägerkörper
- 2: Wabenkörper
- 3: Gehäuse
- 4: Wellmantel
- 5: Außenseite
- 6: Innenseite
- 7: Lotstreifen
- 8: Lotbegrenzungsmittel, Kante
- 9: Erstreckung
- 10: Geometrische Längsachse
- 11: Breite
- 12: Einkerbung
- 13: Wellstruktur
- 14: Querstruktur
- 15: Radius
- 16: Ausnehmung
- 17: Spalt
- 18: Mikrostruktur
- 19: Begrenzung
- 20: Verbindungsbereich
- 21: Stirnseite
- 22: Freistich
- 23: Manteldicke
- 24: Welllänge
- 25: Wellhöhe
- 26: Anbindungsabschnitt
- 27: Blechfolie
- 28: Kanal
- 29: Länge
- 30: Überstand

## Patentansprüche

1. Katalysator-Trägerkörper (1) mit einer geometrischen Längsachse (10) umfassend einen Wabenkörper (2) und ein Gehäuse (3), wobei zwischen dem Wabenkörper (2) und dem Gehäuse (3) ein Wellmantel (4) mit einer Außenseite (5) und einer Innenseite (6) angeordnet ist, wobei der Wellmantel (4) an seiner Außenseite (5) an Anbindungsabschnitten (26) mit dem Gehäuse (3) und an seiner Innenseite (6) mit dem Wabenkörper (2) fügetechnisch verbunden ist, **dadurch gekennzeichnet, dass** die Anbindungsabschnitte (26) im wesentlichen auf einer gemeinsamen Umfangslinie liegen und eine möglichst kurze Breite (11) in Richtung der Längsachse (10) haben, jedoch so dimensioniert sind, dass sie den Wabenkörper (2) aufgrund ihrer Gesamtfläche bei Betriebsbedingungen sicher halten können.

2. Katalysator-Trägerkörper nach Anspruch 1, **dadurch gekennzeichnet, dass** die Anbindungsabschnitte (26) annähernd mittig in Bezug auf die Erstreckung (9) des Wabenkörpers (2) in Richtung der Längsachse (10) um den Wabenkörper (2) angeordnet sind.

3. Katalysator-Trägerkörper nach Anspruch 1, **dadurch gekennzeichnet, dass** die Anbindungsabschnitte (26) außermittig in Bezug auf die Erstreckung (9) des Wabenkörpers (2) in Richtung der Längsachse (10) um den Wabenkörper (2) angeordnet sind.

4. Katalysator-Trägerkörper (1) nach einem der vorhergehenden Ansprüche, **dadurch gekennzeichnet, dass** die Anbindungsabschnitte (26) eine Breite (11) in Richtung der Längsachse (10) haben, die kleiner 10 mm, insbesondere kleiner 6 mm und bevorzugt kleiner 4 mm ist.

5. Katalysator-Trägerkörper nach einem der vorhergehenden Ansprüche, **dadurch gekennzeichnet, dass** die Anbindungsabschnitte (26) durch einen Lötstreifen (7) gebildet sind, wobei der Wellmantel (4) und/oder das Gehäuse (3) mindestens ein Lotbegrenzungsmittel (8) aufweisen, das im wesentlichen parallel zu dem Lotstreifen (7) verläuft und diesen in Richtung der Längsachse begrenzt.

6. Katalysator-Trägerkörper nach Anspruch 5, **dadurch gekennzeichnet, dass** das Lotbegrenzungsmittel (8) ein beschichteter und/oder bearbeiteter Oberflächenbereich von Wellmantel (4) und oder Gehäuse (3) ist.

7. Katalysator-Trägerkörper (1) nach Anspruch 5, **dadurch gekennzeichnet, dass** das Lotbegrenzungsmittel (8) mindestens eine Einkerbung (12) ist.

8. Katalysator-Trägerkörper (1) nach Anspruch 5, **dadurch gekennzeichnet, dass** der Wellmantel (4) zusätzlich zu seiner im wesentlichen parallel zur Längsachse (10) verlaufenden Wellenstruktur (13) mindestens eine Querstruktur (14) aufweist, die das Lotbegrenzungsmittel (8) bildet.

9. Katalysator-Trägerkörper (1) nach Anspruch 8, **dadurch gekennzeichnet, dass** die mindestens eine Querstruktur (14) radial (15) nach außen gerichtet ist, wobei das Gehäuse (3) bevorzugt mindestens eine kompatible Ausnehmung (16) hat, so dass zwischen der wenigstens einen Querstruktur (14) und der mindestens einen Ausnehmung (16) ein Spalt (17) gebildet ist.

10. Katalysator-Trägerkörper (1) nach einem der vorhergehenden Ansprüche, **dadurch gekennzeichnet, dass** der Wellmantel (4) zusätzlich zu seiner im wesentlichen parallel zur Längsachse (10) verlaufenden Wellenstruktur (13) mindestens eine Mikrostruktur (18) aufweist, welche bevorzugt nahe wenigstens einer Begrenzung (19) des Wellmantels (4) angeordnet ist, wobei hier bevorzugt jeweils mehrere Mikrostrukturen (18) senkrecht zur Längsachse (10) umlaufend ausgebildet sind.

11. Katalysator-Trägerkörper (1) nach einem der vorhergehenden Ansprüche, **dadurch gekennzeichnet, dass** der Wellmantel (4) mindestens zwei Verbindungsbereiche (20) für fügetechnische Verbindungen mit dem Wabenkörper (2) aufweist, wobei diese an der Innenseite (6) des Wellmantels (4) nahe den Stirnseiten (21) des Wabenkörpers (2) angeordnet sind, insbesondere mit ihr abschließen.

12. Katalysator-Trägerkörper (1) nach Anspruch 11, **dadurch gekennzeichnet, dass** das Gehäuse (3) wenigstens einen Freistich (22) hat, welcher in radiale Richtung (15) gesehen den mindestens einen Verbindungsbereich (20) wenigstens teilweise überlagert.

13. Katalysator-Trägerkörper (1) nach einem der vorhergehenden Ansprüche, **dadurch gekennzeichnet, dass** der Wellmantel (4) eine Manteldicke (23) von 0,08 mm bis 0,25 mm hat, wobei die Wellstruktur (13) bevorzugt mit einer Welllänge (24) von 1,5 mm bis 4 mm sowie einer Wellhöhe (25) von 0,5 mm bis 2 mm ausgeführt ist.

14. Verfahren zur Herstellung eines Katalysator-Trägerkörpers (1) mit einer geometrischen Längsachse (10) umfassend einen Wabenkörper (2) und ein Gehäuse (3), wobei zwischen dem Wabenkörper (2) und dem Gehäuse (3) ein Wellmantel (4) mit einer Außenseite (5) und einer Innenseite (6) angeordnet ist, wobei der Wellmantel (4) mit seiner Außenseite (5) mit dem Gehäuse (3) und mit seiner Innenseite (6) mit dem Wabenkörper (2) Fügetechnisch verbunden ist, welches zumindest die folgenden Schritte umfasst:
- Herstellen eines Wabenkörpers (2), eines Wellmantels (4) sowie eines Gehäuses (3), wobei der Wellmantel (4) und/oder das Gehäuse (3) mindestens ein Lotbegrenzungsmittel (8) aufweisen;
- Anbringen wenigstens eines Lotstreifens (7) auf dem Wellmantel (4), wobei dieser im wesentlichen parallel zu dem mindestens einen Lotbegrenzungsmittel (8) angeordnet wird;
- Einfügen des mit dem Wellmantel (4) umgebenen Wabenkörpers (2) in das Gehäuse (3), so dass das mindestens eine Lotbegrenzungsmittel (8) einen Anbindungsäbschnitt (26) mit dem wenigstens einen Lotstreifen (7) begrenzt;
- Ausbilden von fiigetechnischen Verbindungen zumindest zwischen dem Wellmantel (4) und dem Wabenkörper (2) sowie zwischen dem Wellmantel (4) und dem Gehäuse (3), wobei das Lotbegrenzungsmittel (8) ein Auseinanderlaufen des Lotstreifens (7) verhindert.

15. Verfahren nach Anspruch 14, bei dem ein Lotstreifen (7) mit einer Breite (11) von weniger als 10 mm, vorzugsweise weniger als 6 mm, insbesondere weniger als 4 mm, auf der Außenseite (5) des Wellmantels (4) umlaufend ausgebildet und mittig in Bezug auf die Erstreckung (9) des Wabenkörpers (2) in Richtung der Längsachse (10) um den Wabenkörper (2) angeordnet wird.

16. Verfahren nach Anspruch 11, bei dem ein Lotstreifen (7) mit einer Breite (11) von weniger als 10 mm, vorzugsweise weniger als 6 mm, insbesondere weniger als 4 mm, auf der Außenseite (5) des Wellmantels (4) umlaufend ausgebildet und außermittig in Bezug auf die Erstreckung (9) des Wabenkörpers (2) in Richtung der Längsachse (10) um den Wabenkörper (2) angeordnet wird.

## Claims

1. A catalyst support body (1) having a geometric longitudinal axis (10), comprising a honeycomb body (2) and a housing (3), a corrugated jacket (4) having an outer side (5) and an inner side (6) being arranged between the honeycomb body (2) and the housing (3), the corrugated jacket (4) being connected by joining to the housing (3) on its outer side (5) at attachment sections (26) and to the honeycomb body (2) on its inner side (6), **characterized in that** the attachment sections (26) lie substantially on a common circumferential line and have the shortest possible width (11) in the direction of the longitudinal axis (10) but are dimensioned in such a way that they are able to securely hold the honeycomb body (2) under operating conditions on account of their overall surface area.

2. The catalyst support body as claimed in claim 1, **characterized in that** the attachment sections (26) are arranged approximately centrally around the honeycomb body (2) with respect to the extent (9) of the honeycomb body (2) in the direction of the longitudinal axis (10).

3. The catalyst support body as claimed in claim 1, **characterized in that** the attachment sections (26) are arranged in an off-centered way around the honeycomb body (2) with respect to the extent (9) of the honeycomb body (2) in the direction of the longitudinal axis (10).

4. The catalyst support body (1) as claimed in one of the preceding claims, **characterized in that** the attachment sections (26) have a width (11) in the direction of the longitudinal axis (10) of less than 10 mm, in particular less than 6 mm and preferably less than 4 mm.

5. The catalyst support body as claimed in one of the preceding claims, **characterized in that** the attachment sections (26) are formed by a strip (7) of brazing material, with the corrugated jacket (4) and/or the housing (3) having at least one brazing limiting means (8) which runs substantially parallel to the strip of brazing material (7) and delimits it in the direction of the longitudinal axis.

6. The catalyst support body as claimed in claim 5, **characterized in that** the brazing limiting means (8) is a coated and/or machined surface region of corrugated lateral casing (4) and/or housing (3).

7. The catalyst support body as claimed in claim 5, **characterized in that** the brazing limiting means (8) is at least one notch (12).

8. The catalyst support body (1) as claimed in claim 5, **characterized in that** the corrugated jacket (4), in addition to its corrugation structure (13) running substantially parallel to the longitudinal axis (10), has at least one transverse structure (14), which forms the brazing limiting means (8).

9. The catalyst support body (1) as claimed in claim 8, **characterized in that** the at least one transverse structure (14) is directed radially (15) outward, the housing (3) preferably having at least one compatible recess (16), so that a gap (17) is formed between the at least one transverse structure (14) and the at least one recess (16).

10. The catalyst support body (1) as claimed in one of the preceding claims, **characterized in that** the corrugated jacket (4), in addition to its corrugation structure (13) running substantially parallel to the longitudinal axis (10), has at least one microstructure (18) which is preferably arranged close to at least one boundary (19) of the corrugated jacket (4), in this case preferably in each case a plurality of microstructures (18) being formed all the way around perpendicular to the longitudinal axis (10).

11. The catalyst support body (1) as claimed in one of the preceding claims, **characterized in that** the corrugated jacket (4) has at least two connection regions (20) for connections by joining to the honeycomb body (2), these connection regions being arranged on the inner side (6) of the corrugated jacket (4), in the vicinity of the end sides (21) of the honeycomb body (2), in particular ending flush therewith.

12. The catalyst support body (1) as claimed in claim 11, **characterized in that** the housing (3) has at least one undercut (22) which, as seen in the radial direction (15), is at least partially superimposed on the at least one connection region (20).

13. The catalyst support body (1) as claimed in one of the preceding claims, **characterized in that** the corrugated jacket (4) has a casing thickness (23) of from 0.08 mm to 0.25 mm, the corrugated structure (13) preferably being designed with a corrugation length (24) of from 1.5 mm to 4 mm and a corrugation height (25) of from 0.5 mm to 2 mm.

14. A process for producing a catalyst support body (1) having a geometric longitudinal axis (10), comprising a honeycomb body (2) and a housing (3), a corrugated jacket (4) having an outer side (5) and an inner side (6) being arranged between the honeycomb body (2) and the housing (3), the corrugated jacket (4) being connected by joining to the housing (3) on its outer side (5) and to the honeycomb body (2) on its inner side (6), which process comprises at least the following steps:
- production of a honeycomb body (2), a corrugated jacket (4) and a housing (3), the corrugated jacket (4) and/or the housing (3) having at least one brazing limiting means (8);
- arranging at least one strip of brazing material (7) on the corrugated jacket (4), this strip of brazing material being arranged substantially parallel to the at least one brazing limiting means (8);
- inserting the honeycomb body (2) surrounded by the corrugated jacket (4) into the housing (3), so that the at least one brazing limiting means (8) delimits an attachment section (26) having the at least one strip of brazing material (7);
- forming connections by joining at least between the corrugated jacket (4) and the honeycomb body (2) and also between the corrugated jacket (4) and the housing (3), the brazing limiting means (8) preventing the strip of brazing material (7) from spreading out.

15. The process as claimed in claim 14, in which a strip of brazing material (7) with a width (11) of less than 10 mm, preferably less than 6 mm, in particular less than 4 mm, is formed all the way around the outer side (5) of the corrugated jacket (4) and is arranged centrally around the honeycomb body (2) with respect to the extent (9) of the honeycomb body (2) in the direction of the longitudinal axis (10).

16. The process as claimed in claim 11, in which a strip of brazing material (7) with a width (11) of less than 10 mm, preferably less than 6 mm, in particular less than 4 mm, is formed all the way around the outer side (5) of the corrugated jacket (4) and is arranged off-centered around the honeycomb body (2) with respect to the extent (9) of the honeycomb body (2) in the direction of the longitudinal axis (10).

## Revendications

1. Corps support de catalyseur (1) avec un axe longitudinal géométrique (10), comportant un corps en nids d'abeilles (2) et un boîtier (3), une enveloppe ondulée (4) ayant une face extérieure (5) et une face intérieure (6) étant agencée entre le corps en nids d'abeilles (2) et le boîtier (3), dans quel cas l'enveloppe ondulée (4) est reliée par technique de jointoiement au boîtier (3) sur sa face extérieure (5) à des sections de rattachage (26) et au corps en nids d'abeilles (2) sur sa face intérieure (6), **caractérisé en ce que** les sections de rattachage (26) sont situées sensiblement sur une ligne circonférentielle commune et ont une largeur (11) la plus courte que possible en direction de l'axe longitudinal (10), mais sont dimensionnées de façon telle que dû à leur surface totale elles sont capables de retenir sûrement le corps en nids d'abeilles (2) sous des conditions d'opération.

2. Corps support de catalyseur selon la revendication 1, **caractérisé en ce que** les sections de rattachage (26) sont agencées approximativement de manière centrale autour du corps en nids d'abeilles (2) par rapport à l'étendue (9) du corps en nids d'abeilles (2) en direction de l'axe longitudinal (10).

3. Corps support de catalyseur selon la revendication 1, **caractérisé en ce que** les sections de rattachage (26) sont agencées de façon excentrée au tour du corps en nids d'abeilles (2) par rapport à l'étendue (9) du corps en nids d'abeilles (2) en direction de l'axe longitudinal (10).

4. Corps support de catalyseur (1) selon l'une des revendications précédentes, **caractérisé en ce que** les sections de rattachage (26) ont une largeur (11) en direction de l'axe longitudinal (10) qui est plus petite que 10 mm, notamment plus petite que 6 mm et de préférence plus petite que 4 mm.

5. Corps support de catalyseur selon l'une des revendications précédentes, **caractérisé en ce que** les sections de rattachage (26) sont formées par une bande de matériau de brasage (7), dans quel cas l'enveloppe ondulée (4) et/ou le boîtier (3) ont au moins un moyen de limitation de brasage (8) qui s'étend sensiblement de façon parallèle à la bande de matériau de brasage (7) et qui limite celui-ci en direction de l'axe longitudinal.

6. Corps support de catalyseur selon la revendication 5, **caractérisé en ce que** le moyen de limitation de brasage (8) est une région de surface revêtue et/ou traitée de l'enveloppe ondulée (4) et/ou du boîtier (3).

7. Corps support de catalyseur (I) selon la revendication 5, **caractérisé en ce que** le moyen de limitation de brasage (8) est au moins une encoche (12).

8. Corps support de catalyseur (1) selon la revendication 5, **caractérisé en ce que** l'enveloppe ondulée (4) a additionnellement à sa structure d'ondulation (13) s'étendant sensiblement de manière parallèle à l'axe longitudinal (10), au moins une structure transversale (14) qui forme le moyen de limitation de brasage (8).

9. Corps support de catalyseur (1) selon la revendication 8, **caractérisé en ce que** l'au moins une structure transversale (14) est dirigée radialement (15) vers l'extérieur, le boîtier (3) ayant de préférence au moins un dégagement (16) compatible, de sorte qu'une fente (17) est formée entre l'au moins une structure transversale (14) et l'au moins un dégagement (16).

10. Corps support de catalyseur (1) selon l'une des revendications précédentes, **caractérisé en ce que** l'enveloppe ondulée (4) a additionnellement à sa structure d'ondulation (13), s'étendant sensiblement de manière parallèle à l'axe longitudinal (10), au moins une microstructure (18) qui est agencée de préférence à proximité d'au moins une limitation (19) de l'enveloppe ondulée (4), dans quel cas respectivement une pluralité de microstructures (18) est réalisée de préférence ici de manière circonférentielle, perpendiculaire à l'axe longitudinal (10).

11. Corps support de catalyseur (1) selon l'une des revendications précédentes, **caractérisé en ce que** l'enveloppe ondulée (4) a au moins deux régions de liaison (20) pour des liaisons par technique de jointoiement avec le corps en nids d'abeilles (2), dans quel cas celles-ci sont agencées sur la face intérieure (6) de l'enveloppe ondulée (4) à proximité des faces frontales (21) du corps en nids d'abeilles (2), notamment terminent avec elle.

12. Corps support de catalyseur (1) selon la revendication 11, **caractérisé en ce que** le boîtier (3) a au moins une contre-dépouille (22) qui, vu en direction radiale (15), est superposée au moins partiellement sur l'au moins une région de liaison (20).

13. Corps support de catalyseur (1) selon l'une des revendications précédentes, **caractérisé en ce que** l'enveloppe ondulée (4) a une épaisseur d'enveloppe (23) de 0,08 mm à 0,25 mm, la structure d'ondulation (13) étant réalisée de préférence avec une longueur d'ondulation (24) de 1,5 mm à 4 mm ainsi qu'avec une hauteur d'ondulation (25) de 0,5 mm à 2 mm.

14. Procédé destiné à la fabrication d'un corps support de catalyseur (1) avec un axe longitudinal géométrique (10), comportant un corps en nids d'abeilles (2) et un boîtier (3), une enveloppe ondulée (4) ayant une face extérieure (5) et une face intérieure (6) étant agencée entre le corps en nids d'abeilles (2) et le boîtier (3), dans quel cas l'enveloppe ondulée (4) est reliée par technique de jointoiement au boîtier (3) avec sa face extérieure (5) et au corps en nids d'abeilles (2) avec sa face intérieure (6), procédé comportant au moins les étapes suivantes :
- Fabrication d'un corps en nids d'abeilles (2), d'une enveloppe ondulée (4) ainsi que d'un boîtier (3), l'enveloppe ondulée (4) et/ou le boîtier (3) ayant au moins un moyen de limitation de brasage (8) ;
- rapporter au moins une bande de matériau de brasage (7) sur l'enveloppe ondulée (4), celui-ci étant agencé sensiblement de manière parallèle à l'au moins un moyen de limitation de brasage (8) ;
- introduction du corps en nids d'abeilles (2), entouré de l'enveloppe ondulée (4) dans le boîtier (3), de sorte que l'au moins un moyen de limitation de brasage (8) délimite une section de rattachage (26) avec l'au moins une bande de matériau de brasage (7) ;
- réalisation de liaisons par technique de jointoiement au moins entre l'enveloppe ondulée (4) et le corps en nids d'abeilles (2) ainsi qu'entre l'enveloppe ondulée (4) et le boîtier (3), le moyen de limitation de brasage (8) empêchant la bande de matériau de brasage (7) de s'étaler.

15. Procédé selon la revendication 14, dans lequel une bande de matériau de brasage (7) avec une largeur (11) de moins que 10 mm, de préférence moins que 6 mm, notamment moins que 4 mm, est réalisée de façon circonférentielle sur la face extérieure (5) de l'enveloppe ondulée (4) et est agencée centralement autour du corps en nids d'abeilles (2) par rapport à l'étendue (9) du corps en nids d'abeilles (2) en direction de l'axe longitudinal (10).

16. Procédé selon la revendication 11, dans lequel une bande de matériau de brasage (7) ayant une largeur (11) de moins que 10 mm, de préférence moins que 6 mm, notamment moins que 4 mm, est réalisée de façon circonférentielle sur la face extérieure (5) de l'enveloppe ondulée (4) et est agencée autour du corps en nids d'abeilles (2) de manière excentrée par rapport à l'étendue (9) du corps en nids d'abeilles (2) en direction de l'axe longitudinal (10).
